# DEMANDE DE BREVET EUROPEEN

(11) **EP 2 147 624 A1**
(43) Date de publication de la demande: **27.01.2010**
(21) Numéro de dépôt: 09356047.2
(22) Date de dépôt: 22.07.2009
(51) Int. Cl.: A47J 43/07

(54) **Enceinte de travail d'appareil électroménager de préparation culinaire à étanchéité ameliorée**

(30) Priorité: 25.07.2008 FR 0804236
(71) Demandeur: Seb SA, 69130 Ecully (FR)
(72) Inventeur: Noguez, Jean-Michel, 65100 Lourdes (FR); Smit, Robert, 65290 Louey (FR); Peyras, Lionel, 65100 Lourdes (FR)
(74) Mandataire: Kiehl, Hubert

(57) **Abrégé**

- L'invention concerne une enceinte de travail (4) pour appareil électroménager de préparation culinaire, comprenant un récipient (5) et un couvercle (6), le couvercle (6) présentant au moins un organe de verrouillage (11) prévu pour venir en prise par rotation avec un organe d'accrochage (21) du récipient (5), le couvercle (6) présentant une zone d'appui annulaire (10) prévue pour reposer sur une surface d'appui annulaire (20) du récipient (5) lorsque le couvercle (6) est verrouillé sur le récipient (5).
- Conformément à l'invention, la surface d'appui annulaire (20) entoure une nervure annulaire supérieure (22).
- L'invention concerne également un appareil électroménager de préparation culinaire comportant une enceinte de travail (4) du type précité.

## Description

La présente invention concerne le domaine technique des appareils électroménagers de préparation culinaire comportant un outil de travail rotatif agencé dans une enceinte de travail comprenant un récipient et un couvercle.

La présente invention concerne plus particulièrement l'étanchéité de l'enceinte de travail.

Il est connu du document FR 2 147 361 une enceinte de travail du type précité comprenant un récipient et un couvercle assemblés par baïonnette. Le couvercle présente une paroi annulaire inférieure s'étendant à l'intérieur dudit récipient. Toutefois un tel assemblage par baïonnette ne permet pas d'obtenir une étanchéité satisfaisante, les liquides sont susceptibles de remonter entre la paroi annulaire inférieure du couvercle et la paroi latérale du récipient.

Un but de la présente invention est de proposer une enceinte de travail pour appareil électroménager de préparation culinaire présentant une bonne étanchéité entre un récipient et un couvercle, sans nécessiter l'utilisation d'un joint d'étanchéité.

Un autre but de la présente invention est de proposer un appareil électroménager de préparation culinaire comportant une enceinte de travail présentant une bonne étanchéité entre un récipient et un couvercle, sans nécessiter l'utilisation d'un joint d'étanchéité.

Ces buts sont atteints avec une enceinte de travail pour appareil électroménager de préparation culinaire, comprenant un récipient et un couvercle, le couvercle présentant au moins un organe de verrouillage prévu pour venir en prise par rotation avec un organe d'accrochage du récipient, le couvercle présentant une zone d'appui annulaire prévue pour reposer sur une surface d'appui annulaire du récipient lorsque le couvercle est verrouillé sur le récipient, la surface d'appui annulaire entourant une nervure annulaire supérieure, du fait que la surface d'appui annulaire est agencée entre l'organe d'accrochage et la nervure annulaire supérieure. Lors de la réalisation de préparations liquides, un vortex peut remonter le long de la paroi latérale du récipient. La nervure annulaire supérieure permet de guider le vortex liquide vers la face inférieure du couvercle. Ainsi les infiltrations de liquide entre la paroi latérale du récipient et le couvercle peuvent être évitées. La présence d'un joint d'étanchéité entre le couvercle et le récipient n'est plus nécessaire.

Avantageusement alors, le couvercle présente une paroi inférieure s'étendant à distance de la nervure annulaire supérieure lorsque le couvercle est verrouillé sur le récipient. Cette disposition permet de réaliser un décrochement entre la paroi latérale interne du récipient terminée par la nervure annulaire supérieure et une paroi latérale interne du couvercle. Ce décrochement permet de perturber le vortex liquide et de réduire les infiltrations entre le couvercle et la nervure annulaire supérieure.

Avantageusement encore, la surface d'appui annulaire est agencée dans une rainure annulaire supérieure d'une paroi latérale du récipient. Ainsi la paroi latérale du récipient peut s'élever plus haut que la nervure annulaire supérieure. Cette disposition permet de mieux retenir le liquide dans le récipient. Cette disposition permet également de simplifier la construction du couvercle.

Avantageusement encore, l'organe d'accrochage est agencé sur une face interne du récipient. Cette disposition permet d'obtenir une face externe de récipient dépourvue de parties techniques. Cette disposition permet aussi de faciliter l'agencement d'une poignée.

Avantageusement encore, la zone d'appui annulaire est formée par un bord inférieur d'une paroi annulaire inférieure du couvercle. Cette disposition permet de réduire les frottements entre le couvercle et le récipient lors de la rotation du couvercle sur le récipient.

Avantageusement alors, l'organe de verrouillage est agencé sur une face externe de la paroi annulaire inférieure du couvercle. Cette disposition permet de simplifier la construction du couvercle.

Avantageusement encore, pour faciliter l'utilisation, le couvercle comporte une butée latérale prévue pour coopérer avec une autre butée latérale du récipient lorsque l'organe de verrouillage coopère avec l'organe d'accrochage.

Avantageusement encore, pour une meilleure étanchéité, l'organe de verrouillage, respectivement l'organe d'accrochage, présente une conformation prévue pour venir en contact avec l'organe d'accrochage, respectivement avec l'organe de verrouillage, lorsque le couvercle est verrouillé sur le récipient. Ainsi un serrage de la zone d'appui annulaire sur la surface d'appui annulaire peut être obtenu lorsque le couvercle est verrouillé sur le récipient.

Avantageusement encore, pour faciliter le verrouillage, la conformation est agencée en fin de course de verrouillage. Cette disposition permet de réduire les frottements entre le couvercle et le récipient lors du verrouillage du couvercle sur le récipient.

Selon une construction avantageuse, le récipient comporte une poignée.

Ces buts sont également atteints avec un appareil électroménager de préparation culinaire comportant une base logeant un moteur prévu pour entraîner un outil de travail rotatif agencé dans une enceinte de travail, dans lequel l'enceinte de travail est conforme à l'une au moins des caractéristiques précitées.

L'invention sera mieux comprise à l'étude de quatre exemples de réalisation et d'une variante, pris à titre nullement limitatif, illustrés dans les figures annexées, dans lesquelles :
- la figure 1 est une vue schématique d'un premier exemple de réalisation d'un appareil électroménager de préparation culinaire comportant une enceinte de travail selon l'invention,
- la figure 2 est une vue en perspective du couvercle de l'enceinte de travail de l'appareil électroménager de préparation culinaire illustré sur la figure 1,
- la figure 3 est une vue en perspective du récipient de l'enceinte de travail de l'appareil électroménager de préparation culinaire illustré sur la figure 1,
- la figure 4 montre un organe de verrouillage du couvercle illustré sur la figure 2,
- la figure 5 illustre l'assemblage entre le couvercle et le récipient de l'appareil électroménager de préparation culinaire illustré sur les figures 1 à 4, lorsque le couvercle est verrouillé sur le récipient.
- la figure 6 montre un organe d'accrochage du couvercle d'une variante de réalisation de l'appareil électroménager de préparation culinaire illustré sur les figures 1 à 5,
- la figure 7 illustre l'assemblage entre le couvercle et le récipient d'un deuxième exemple de réalisation d'un appareil électroménager de préparation culinaire comportant une enceinte de travail selon l'invention,
- la figure 8 illustre l'assemblage entre le couvercle et le récipient d'un troisième exemple de réalisation d'un appareil électroménager de préparation culinaire comportant une enceinte de travail selon l'invention,
- la figure 9 illustre l'assemblage entre le couvercle et le récipient d'un quatrième exemple de réalisation d'un appareil électroménager de préparation culinaire comportant une enceinte de travail selon l'invention.

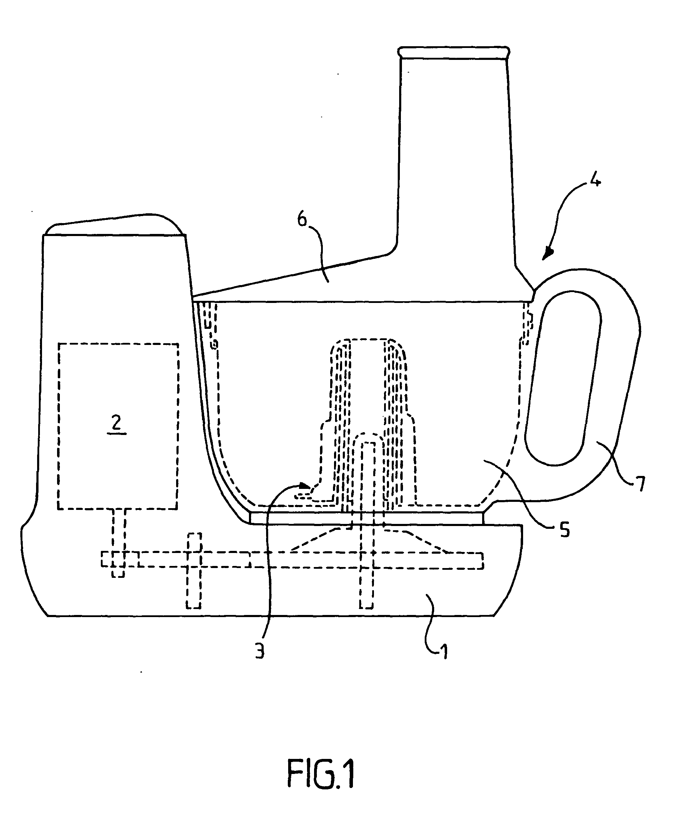

L'appareil électroménager de préparation culinaire illustré sur la figure 1 comporte une base 1 logeant un moteur 2 prévu pour entraîner un outil de travail rotatif 3 agencé dans une enceinte de travail 4. L'enceinte de travail 4 comprend un récipient 5 et un couvercle 6. Le récipient 5 comporte une poignée 7.

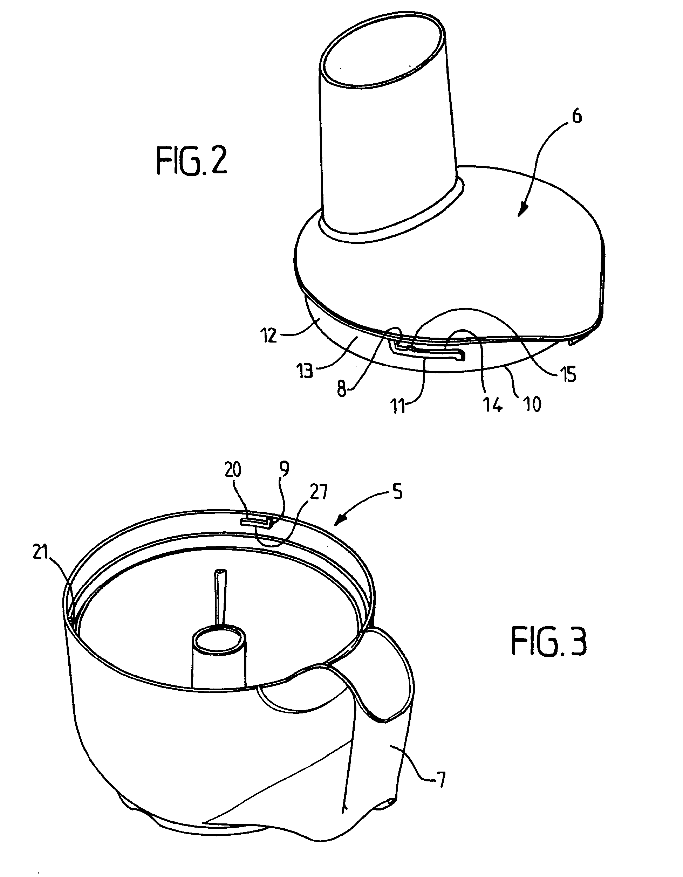

Tel que mieux visible sur les figures 2 à 5, le couvercle 6 présente une zone d'appui annulaire 10 prévue pour reposer sur une surface d'appui annulaire 20 du récipient 5 lorsque le couvercle 6 est verrouillé sur le récipient 5. Le couvercle 6 présente au moins un organe de verrouillage 11 prévu pour venir en prise par rotation avec un organe d'accrochage 21 du récipient 5. Tel que représenté sur les figures 1 à 5, l'organe de verrouillage 11 et l'organe d'accrochage 21 forment des moyens de verrouillage à baïonnette. Si désiré, le couvercle 6 peut présenter plusieurs organes de verrouillage 11 et le récipient 5 peut présenter plusieurs organes d'accrochage 21. Selon un mode de réalisation préféré, le couvercle 6 présente trois organes de verrouillage 11 et le récipient 5 trois organes d'accrochage 21. Le couvercle 6 comporte une butée latérale 8 prévue pour coopérer avec une autre butée latérale 9 du récipient 5 lorsque l'organe de verrouillage 11 coopère avec l'organe d'accrochage 21.

La surface d'appui annulaire 20 entoure une nervure annulaire supérieure 22. Plus particulièrement selon le premier exemple de réalisation illustré sur les figures 1 à 5, la surface d'appui annulaire 20 est agencée dans une rainure annulaire supérieure 23 d'une paroi latérale 24 du récipient 5. Le couvercle 6 présente une paroi annulaire inférieure 12.

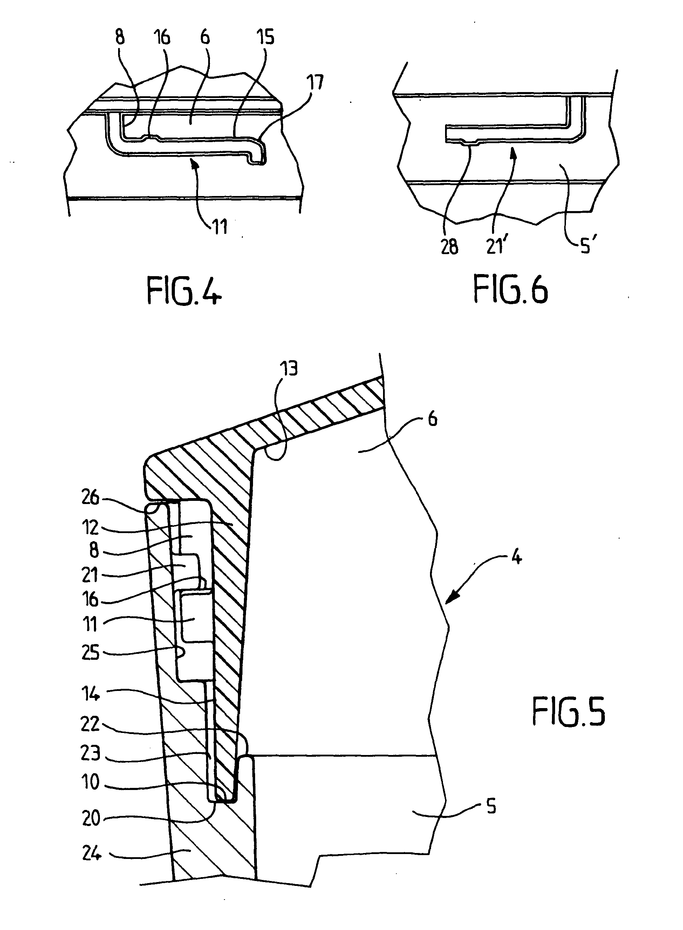

Tel que mieux visible sur la figure 5, la paroi annulaire inférieure 12 s'étend à l'intérieur du récipient 5 lorsque le couvercle 6 est verrouillé sur le récipient 5. La hauteur de la paroi annulaire inférieure 12 est supérieure à la hauteur de la nervure annulaire supérieure 22. La zone d'appui annulaire 10 est formée par un bord inférieur de la paroi annulaire inférieure 12 du couvercle 6.

Le couvercle 6 présente une paroi inférieure 13 entourée par la paroi annulaire inférieure 12. La paroi inférieure 13 s'étend à distance de la nervure annulaire supérieure 22 lorsque le couvercle 6 est verrouillé sur le récipient 5.

Tel que mieux visible sur les figures 2, 4 et 5, l'organe de verrouillage 11 est agencé sur une face externe 14 de la paroi annulaire inférieure 12 du couvercle 6. L'organe de verrouillage 11 présente une surface de guidage 15. L'organe de verrouillage 11 présente une conformation 16 prévue pour venir en contact avec l'organe d'accrochage 21 lorsque le couvercle 6 est verrouillé sur le récipient 5. La conformation 16 est agencée sur la surface de guidage 15. Pour réduire les frottements, la conformation 16 est avantageusement agencée en fin de course de verrouillage. La surface de guidage 15 présente un bord latéral 17 chanfreiné. La butée latérale 8 prolonge la surface de guidage 15.

Tel que mieux visible sur les figures 3 et 5, l'organe d'accrochage 21 est agencé sur une face interne 25 du récipient 5. L'organe d'accrochage 21 est agencé entre un bord supérieur 26 du récipient 5 et la surface d'appui annulaire 20. L'organe d'accrochage 21 est agencé entre le bord supérieur 26 du récipient 5 et la rainure annulaire supérieure 23. Le bord supérieur 26 du récipient 5 entoure la surface d'appui annulaire 20 et la nervure annulaire supérieure 22. L'organe d'accrochage 21 présente une surface de retenue 27. L'autre butée latérale 9 prolonge la surface de retenue 27.

Tel que bien visible sur la figure 5, la surface d'appui annulaire 20 est agencée entre l'organe d'accrochage 21 et la nervure annulaire supérieure 22.

La présente invention fonctionne et s'utilise de la manière suivante. L'utilisateur pose le couvercle 6 sur le récipient 5 de manière à ce que la zone d'appui annulaire 10 du couvercle 6 repose sur la surface d'appui annulaire 20 du récipient 5. L'utilisateur tourne ensuite le couvercle 6 par rapport au récipient 5 de manière à engager la surface de guidage 15 de l'organe de verrouillage 11 sous la surface de retenue 27 de l'organe d'accrochage 21. Lorsque le couvercle 6 est verrouillé sur le récipient 5, la conformation 16 vient en contact avec l'organe d'accrochage 21 en exerçant un léger appui sur la surface de retenue 27. La butée latérale 8 du couvercle 6 coopérant avec l'autre butée latérale 9 du récipient 5 limite la rotation du couvercle 6 par rapport au récipient 5. L'enceinte de travail 4 présente ainsi une bonne étanchéité lorsque le couvercle 6 est verrouillé sur le récipient 5, sans utilisation d'un joint d'étanchéité.

Si désiré, l'organe de verrouillage 11 peut être dépourvu de conformation 16. La figure 6 présente une variante de réalisation dans laquelle l'organe d'accrochage 21' du récipient 5' présente une conformation 28 prévue pour venir en contact avec l'organe de verrouillage 11. Ainsi la surface d'appui annulaire 20 peut être agencée entre l'organe d'accrochage 21' et la nervure annulaire supérieure 22.

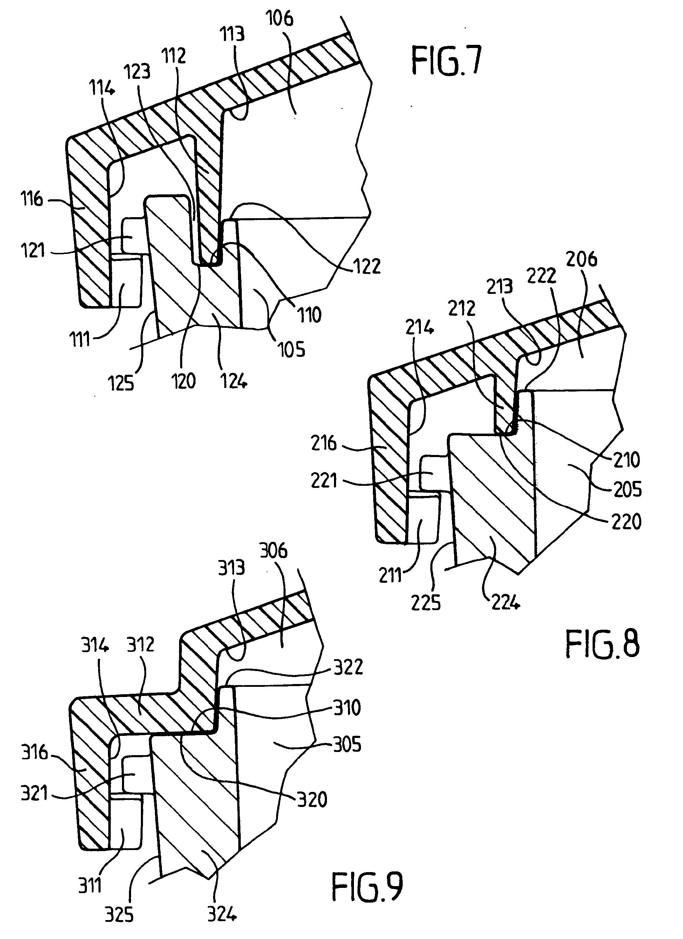

Le deuxième exemple de réalisation illustré sur la figure 7, le troisième exemple de réalisation illustré sur la figure 8 et le quatrième exemple de réalisation illustré sur la figure 9 diffèrent du premier exemple de réalisation illustré sur les figures 1 à 5 en ce que l'organe d'accrochage 121, 221, 321 est agencé sur une face externe 125, 225, 325 du récipient 105, 205, 305 et en ce que l'organe de verrouillage 111, 211, 311 est agencé sur une face interne 114, 214, 314 d'une paroi périphérique 116, 216, 316 du couvercle 106, 206, 306.

Le troisième exemple de réalisation illustré sur la figure 8 et le quatrième exemple de réalisation illustré sur la figure 9 diffèrent du premier exemple de réalisation illustré sur les figures 1 à 5 en ce que la paroi latérale 224, 324 du récipient 205, 305 est dépourvue de rainure annulaire supérieure.

Le couvercle 106, 206, 306 présente une zone d'appui annulaire 110, 210, 310 prévue pour reposer sur une surface d'appui annulaire 120, 220, 320 du récipient 105, 205, 305 lorsque le couvercle 106, 206, 306 est verrouillé sur le récipient 105, 205, 305. La surface d'appui annulaire 120, 220, 320 entoure une nervure annulaire supérieure 122, 222, 322. Le couvercle 106 ; 206 ; 306 présente une paroi inférieure 113 ; 213 ; 313 s'étendant à distance de la nervure annulaire supérieure 122 ; 222 ; 322 lorsque le couvercle 106 ; 206 ; 306 est verrouillé sur le récipient 105 ; 205 ; 305. La surface d'appui annulaire 120 est agencée dans une rainure annulaire supérieure 123 d'une paroi latérale 124 du récipient 105. La zone d'appui annulaire 110, 210 est formée par un bord inférieur d'une paroi annulaire inférieure 112, 212 du couvercle 106, 206.

Le quatrième exemple de réalisation illustré sur la figure 9 diffère du premier exemple de réalisation illustré sur les figures 1 à 5 en ce que la zone d'appui annulaire 310 est formée par une face inférieure d'une collerette 312 du couvercle 306.

Tel que bien visible sur les figures 7, 8 et 9, la surface d'appui annulaire 120, 220, 320 est agencée entre l'organe d'accrochage 121, 221, 321 et la nervure annulaire supérieure 122, 222, 322.

La variante de réalisation illustrée sur la figure 6 peut être adaptée aux différents exemples de réalisation.

La présente invention n'est nullement limitée aux exemples de réalisation décrits et à leurs variantes, mais englobe de nombreuses modifications dans le cadre des revendications.

## Revendications

1. Enceinte de travail (4) pour appareil électroménager de préparation culinaire, comprenant un récipient (5 ; 5' ; 105 ; 205 ; 305) et un couvercle (6; 106; 206; 306), le couvercle (6; 106; 206; 306) présentant au moins un organe de verrouillage (11 ; 111 ; 211 ; 311), prévu pour venir en prise par rotation avec un organe d'accrochage (21 ; 21' ; 121 ; 221 ; 321) du récipient (5 ; 5' ; 105 ; 205 ; 305), le couvercle (6 ; 106 ; 206 ; 306) présentant une zone d'appui annulaire (10 ; 110 ; 210 ; 310) prévue pour reposer sur une surface d'appui annulaire (20 ; 120 ; 220 ; 320) du récipient (5 ; 5' ; 105 ; 205 ; 305) lorsque le couvercle (6 ; 106 ; 206 ; 306) est verrouillé sur le récipient (5 ; 5' ; 105 ; 205 ; 305), la surface d'appui annulaire (20 ; 120 ; 220 ; 320) entourant une nervure annulaire supérieure (22 ; 122 ; 222 ; 322), **caractérisée en ce que** la surface d'appui annulaire (20 ; 120 ; 220 ; 320) est agencée entre l'organe d'accrochage (21 ; 21' ; 121 ; 221 ; 321) et la nervure annulaire supérieure (22 ; 122 ; 222 ; 322).

2. Enceinte de travail selon la revendication 1, **caractérisée en ce que** la surface d'appui annulaire (20 ; 120) est agencée dans une rainure annulaire supérieure (23 ; 123) d'une paroi latérale (24 ; 124) du récipient (5 ; 5' ; 105).

3. Enceinte de travail selon l'une des revendications 1 ou 2, **caractérisé en ce que** l'organe d'accrochage (21) est agencé sur une face interne (25) du récipient (5 ; 5').

4. Enceinte de travail selon l'une des revendications 1 à 3, **caractérisée en ce que** la zone d'appui annulaire (10 ; 110 ; 210) est formée par un bord inférieur d'une paroi annulaire inférieure (12 ; 112 ; 212) du couvercle (6 ; 106 ; 206).

5. Enceinte de travail selon la revendication 3 et la revendication 4, **caractérisée en ce que** l'organe de verrouillage (11) est agencé sur une face externe (14) de la paroi annulaire inférieure (12) du couvercle (6).

6. Enceinte de travail selon l'une des revendications 1 à 5, **caractérisé en ce que** le couvercle (6) comporte une butée latérale (8) prévue pour coopérer avec une autre butée latérale (9) du récipient (5 ; 5') lorsque l'organe de verrouillage (11) coopère avec l'organe d'accrochage (21).

7. Enceinte de travail selon l'une des revendications 1 à 6, **caractérisé en ce que** l'organe de verrouillage (11), respectivement l'organe d'accrochage (21'), présente une conformation (16 ; 28) prévue pour venir en contact avec l'organe d'accrochage (21), respectivement avec l'organe de verrouillage (11), lorsque le couvercle (6) est verrouillé sur le récipient (5 ; 5').

8. Enceinte de travail selon la revendication 7, **caractérisée en ce que** la conformation (16 ; 28) est agencée en fin de course de verrouillage.

9. Enceinte de travail selon l'une des revendications 1 à 8, **caractérisé en ce que** le récipient (5 ; 5' ; 105 ; 205 ; 305) comporte une poignée (7).

10. Appareil électroménager de préparation culinaire comportant une base (1) logeant un moteur (2) prévu pour entraîner un outil de travail rotatif (3) agencé dans une enceinte de travail (4), **caractérisé en ce que** l'enceinte de travail (4) est conforme à l'une des revendications 1 à 9.
